Europäisches Patentamt

European Patent Office

Office européen des brevets

(19)

(11) Numéro de publication: **0 295 997**
**A1**

## (12) DEMANDE DE BREVET EUROPEEN

(21) Numéro de dépôt: **88401319.4**

(22) Date de dépôt: **31.05.88**

(51) Int. Cl.4: **H 01 S 3/139**

(30) Priorité: **02.06.87 FR 8707694**

(43) Date de publication de la demande:
**21.12.88 Bulletin 88/51**

(84) Etats contractants désignés: **BE CH DE GB LI**

(71) Demandeur: **COMMISSARIAT A L'ENERGIE ATOMIQUE**
**31/33, rue de la Fédération**
**F-75015 Paris (FR)**

(72) Inventeur: **Feru, Philippe**
**15, rue des Frères d'Astier de la Vigerie**
**F-75013 Paris (FR)**

**Luciani, Pierre-Yves**
**10, rue de ka Tête Ronde**
**F-91190 Villiers le Bacle (FR)**

(74) Mandataire: **Mongrédien, André et al**
**c/o BREVATOME 25, rue de Ponthieu**
**F-75008 Paris (FR)**

(54) **Laser à moyens d'asservissement en mode fondamental.**

(57) Laser à moyens d'asservissement en mode fondamental.
Ces moyens comprennent quatre thermocouples (T1, T'1, T2, T'2) placés à l'intérieur de la cavité, montés en opposition deux à deux et reliés à des moteurs (M1, M2) actionnant des moyens de réglage (V1, V2) d'un miroir.
Application dans le traitement de matériaux.

FIG. 2

EP 0 295 997 A1

**Description**

## LASER A MOYENS D'ASSERVISSEMENT EN MODE FONDAMENTAL

La présente invention a pour objet un laser à moyens d'asservissement en mode fondamental.

Le faisceau laser est de plus en plus utilisé comme outil de transformation des matériaux. Pour certaines applications, ses caractéristiques doivent être parfaitement connues et maîtrisées. Ainsi, en métallurgie, dans le cas du soudage et du traitement thermique notamment, afin d'obtenir des pénétrations précises, la connaissance de la répartition transverse d'énergie dans le faisceau est primordiale.

Afin d'obtenir la plus grande densité de puissance possible et de travailler dans des conditions de reproductibilité correctes, le mode fondamental, correspondant à une répartition gaussienne de l'énergie, est le plus recherché (mode dit TEMoo).

Dans le cas des lasers à $CO_2$ à flux axial (lent ou rapide), ce mode est obtenu par action sur le réglage des miroirs de la cavité.

On connaît divers moyens permettant le contrôle de la répartition d'énergie d'un faisceau laser dans un plan de section transverse. On peut en décrire trois :

### 1. Impact sur un film.

Il est possible d'analyser l'impact d'une impulsion lumineuse sur un film photographique développé. On obtient, par cette méthode, une image très nette et facile à interpréter de la répartition de l'énergie dans l'impulsion considérée. Il convient toutefois d'émettre quelques réserves quant à la validité des résultats obtenus. Cette procédure présente en effet deux inconvénients majeurs : d'abord elle s'effectue en mode impulsionnel ensuite elle nécessite des puissances très faibles afin de modérer la quantité d'énergie reçue par le film.

Le contrôle a donc lieu alors que l'équilibre thermique de la cavité n'est pas atteint. Il est à noter également que, dans le cas considéré, le mode impulsionnel est obtenu grâce à la commande des impulsions électriques d'excitation du gaz, de sorte que la décharge n'est pas établie en permanence. Les conclusions seraient assurément différentes dans le cas de l'utilisation d'un obturateur mécanique. Or, pendant la montée en température de la cavité, différents phénomènes interviennent. La fenêtre de sortie, soumise au faisceau laser, s'échauffe. Son centre, moins bien refroidi que sa périphérie, atteint une température supérieure. Les dilatations, dues au gradient thermique qui s'établit, entraînent une déformation. La fenêtre, qui est une lame à faces initialement parallèles, devient convexe. Son comportement est alors celui d'une lentille divergente.

Des phénomènes analogues ont lieu dans la colonne de gaz qui, soumise à un gradient thermique, présente un gradient d'indice qui induit une divergence du faisceau.

Ainsi, pour donner des résultats conformes à la réalité, le contrôle de la répartition d'énergie doit-il être effectué en régime permanent, afin que l'équilibre thermique de la cavité soit atteint.

### 2. Action sur un bloc de matière plastique.

Il est également possible d'analyser l'impact du faisceau laser sur un bloc en matériau plastique, par exemple de la marque Altuglass. Contrairement au cas précédent, ce contrôle s'effectue en régime permanent. Les défauts rencontrés plus haut sont donc évités.

Toutefois, dans ce cas, un autre phénomène vient perturber la mesure : le matériau porté en fusion, tend, sous l'effet de la gravité, à s'écouler vers le fond du cratère formé, lissant ainsi les irrégularités dues au profil de la répartition d'énergie.

Comme dans le cas précédent, on obtient une information qualitative qui ne peut servir qu'à un réglage manuel.

### 3. Utilisation d'un analyseur de faisceau à aiguille.

Il est possible de trouver sur le marché des analyseurs de faisceau laser ("LBA" pour "Laser Beam Analyser") ; leur principe de fonctionnement est le suivant : une aiguille en rotation vient couper le faisceau, réfléchissant sur deux cellules une faible partie de l'énergie. On obtient alors le profil de la répartition d'énergie, suivant deux axes perpendiculaires, sur un écran d'oscilloscope.

Un tel principe de mesure entraîne certaines limites d'utilisation. Ne disposant que du profil d'énergie suivant deux axes, il est impossible de conclure quant au mode réel du faisceau laser.

Aucun de ces différents moyens de contrôle de la répartition d'énergie dans un faisceau laser ne permet d'asservir le réglage des miroirs à cette répartition. Le but de l'invention est de proposer un système différent qui présente les qualités requises pour un tel asservissement.

Ce dispositif s'appuie sur une analyse originale du problème, effectuée par les inventeurs et qui est la suivante.

Dans le cas des systèmes classiques (notamment LBA), le but recherché est l'obtention d'une image globale, la plus complète et la plus juste possible, de la répartition d'énergie du faisceau. Dans le cas des lasers multimodes, ils s'avèrent utiles, car ils permettent de connaître les conditions de travail et ainsi de prendre en compte des coefficients correctifs pour appliquer des formules générales. Pour des lasers pouvant fournir un faisceau dans le mode fondamental (TEMoo), ces systèmes classiques facilitent le réglage manuel. Mais ils ne sont pas exploitables en vue d'un asservissement pour lequel le profil énergétique du faisceau n'est en fait pas indispensable : un asservissement ne nécessite qu'un signal lié à la présence ou à l'absence d'une répartition gaussienne.

La physique du laser montre que le mode fondamental est obtenu lorsque les réglages de la cavité sont tels que les axes optiques de ses différents constituants sont confondus. Le faisceau photonique, à l'intérieur de la cavité, est alors lui même colinéaire à cet axe, que l'on désignera par axe optique de la cavité.

Le principe du système de l'invention est directement fondé sur cette particularité : en déterminant la position géométrique du faisceau photonique, on parvient à régler la cavité afin d'obtenir la colinéarité requise, donc le mode fondamental.

Cette détermination est effectuée grâce à des thermodétecteurs : pour une direction transverse donnée, deux thermodétecteurs sont montés radialement et symétriquement de part et d'autre de l'axe optique. Par une mesure différentielle, on obtient un signal d'erreur qui caractérise le décentrage du faisceau.

Le réglage s'effectue alors par une "méthode de zéro". Le signal émis par les thermodétecteurs ne nécessite donc aucun traitement autre que l'amplification.

Une tension de correction peut être apportée au système afin de contrecarrer tout excentrage des capteurs par rapport à l'axe optique.

Le document d'abrégé de brevet japonais vol. 10, n° 82 (E-392) (2139) du 2 avril 1986 et JP-A-60 229 382 du 14 novembre 1985 décrit un laser muni d'un résonateur instable (un miroir concave associé à un miroir convexe) et pourvu de quatre photodétecteurs permettant de stabiliser le faisceau de sortie. Ce faisceau est de type annulaire. Il est obtenu par réflexion sur un miroir de couplage annulaire placé dans la cavité. Il n'y a pas de lumière émise dans la partie axiale du résonateur.

Dans ce type d'appareil, le problème à résoudre est de rendre un faisceau lumineux annulaire stable dans sa forme et sa direction.

Pour cela, on centre en permanence le faisceau annulaire sur le miroir de couplage, qui est lui-même annulaire. Les photodétecteurs sont placés à proximité du miroir de couplage, et sont centrés par rapport à la couronne réfléchissante de ce miroir. Il s'agit donc de résoudre un simple problème de centrage de faisceau.

Le problème que se propose de résoudre l'invention est tout autre puisqu'il est lié au fonctionnement intime du laser et notamment à l'obtention d'un mode fondamental. Le résonateur de ce laser (qui est stable au sens optique du terme) ayant un axe optique et le faisceau photonique ayant lui aussi un axe, il s'agit de rendre ces deux axes colinéaires.

Par ailleurs, les moyens de détection utilisés dans l'invention sont des thermodétecteurs, c'est-à-dire des détecteurs sensibles à un flux thermique placés à la périphérie du faisceau et non des photodétecteurs sensibles au rayonnement photonique donc placés dans le faisceau, ce qui perturbe celui-ci.

De façon précise, la présente invention a pour objet un laser à moyens d'asservissement en mode fondamental, ce laser comprenant une cavité stable ayant un axe optique et dont l'un au moins des deux miroirs qui la limitent est muni de deux moyens de réglage aptes à faire basculer ce miroir autour de deux directions ; ce laser est caractérisé par le fait qu'il comprend deux couples de thermodétecteurs placés à l'intérieur de la cavité, disposés deux à deux symétriquement par rapport à l'axe optique de la cavité et alignés selon deux directions respectivement perpendiculaires auxdites directions de basculement du miroir, deux thermodétecteurs d'un même couple étant montés électriquement en opposition et reliés à un moteur, ce moteur étant apte à agir sur les moyens de réglage du miroir pour faire basculer celui-ci autour de la direction perpendiculaire à la direction des thermodétecteurs de ce couple.

De préférence les thermodétecteurs sont des thermocouples.

De préférence le laser est un laser à anhydride carbonique à flux axial.

De toute façon, les caractéristiques de l'invention apparaîtront mieux à la lumière de la description qui va suivre. Cette description se réfère à des dessins annexés sur lesquels :

     - la figure 1 représente une installation correspondant à un laser à CO2 pouvant être perfectionné selon l'invention,

     - la figure 2 représente les moyens d'asservissement d'un miroir, selon l'invention,

     - la figure 3 montre une variante à directions mutuellement orthogonales,

     - la figure 4 illustre un exemple de circuit de commande d'un moteur.

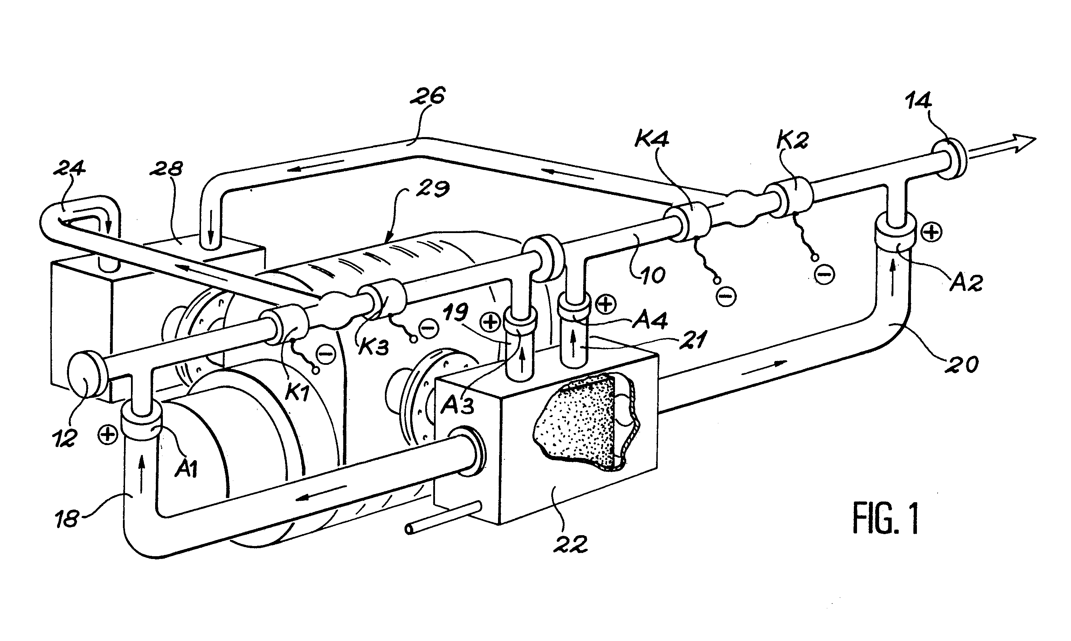

La figure 1 représente une installation comprenant un tube à décharge 10 fermé par un miroir arrière 12 à réflexion totale et un miroir de sortie 14 à réflexion partielle. Le tube est alimenté en gaz à ses deux extrémités par quatre conduits 18, 19, 20 et 21 provenant d'un échangeur thermique 22. Le gaz est évacué du tube par deux conduits 24 et 26 à travers un autre échangeur thermique 28. Le gaz circule dans l'installation grâce à une pompe 29.

La décharge électrique s'effectue entre quatre cathodes K1, K2, K3 et K4 et quatre anodes A1, A2, A3 et A4 portées à des potentiels appropriés.

Les moyens d'orientation des miroirs 12 et 14 ne sont pas représentés sur la figure 1.

La puissance d'un tel laser est de l'ordre de 500 W.

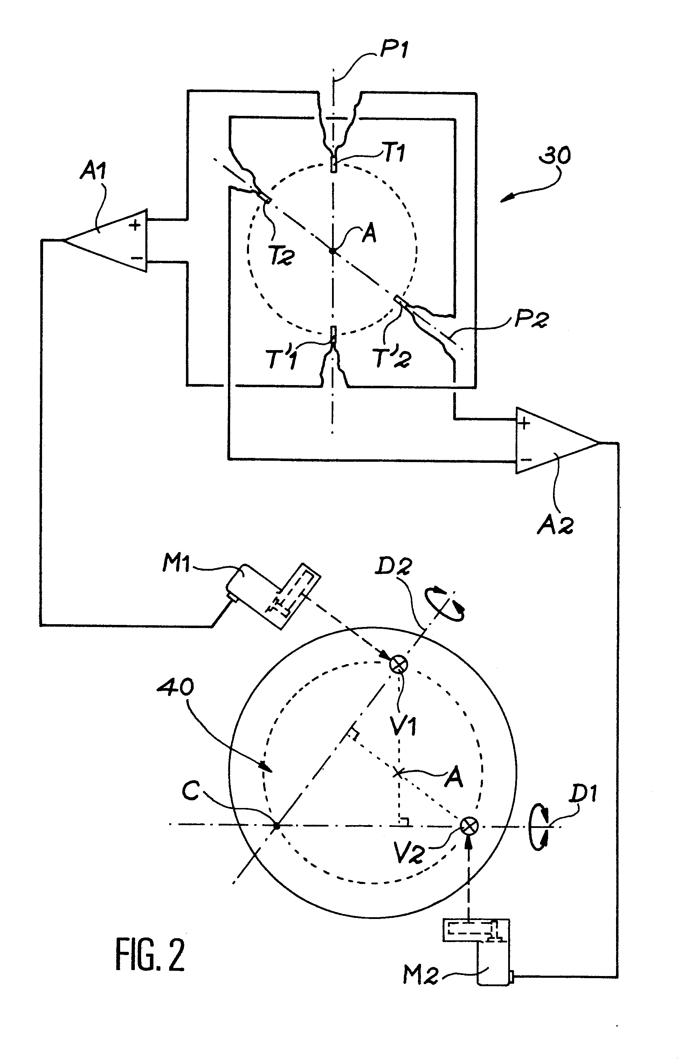

La figure 2 montre un système d'asservissement constitué d'un ensemble de détection 30 associé à un ensemble 40 d'orientation d'un miroir. Ce dernier ensemble s'adapte soit sur le miroir 12 à réflexion totale, soit sur le miroir 14 à réflexion partielle.

L'ensemble 30 comprend deux thermocouples T1, T'1 alignés selon une direction P1 et disposés symétriquement par rapport à l'axe optique A du résonateur du laser à asservir, et deux autres thermocouples T2, T'2 alignés selon une direction P2 et également disposés symétriquement par rapport à l'axe A, tous en périphérie du faisceau photonique.

Ces quatre thermocouples sont disposés à l'intérieur du résonateur. Ils peuvent être fixés dans l'une des pièces de raccordement du tube à décharge proprement dit avec le support du miroir de renvoi.

Les thermocouples T1, T'1 sont montés en opposition et reliés à un amplificateur différentiel A1, commandant un moteur M1.

De la même manière, les thermocouples T2, T'2 sont montés en opposition et reliés à un autre amplificateur différentiel A2, commandant un moteur M2.

L'ensemble 40 est constitué par un système de deux vis V1 et V2, et par un point fixe C (par exemple système dit point-trait-plan). L'action sur la seule vis V1 permet de faire basculer le miroir (représenté en tirets) autour de la direction D1 et l'action sur la seule vis V2 autour de la direction D2.

Le moteur M1 agit sur la vis V1 et le moteur M2 sur la vis V2.

Les directions D1 et D2 sont respectivement perpendiculaires aux directions P1 et P2 du système de détection 30. L'angle entre D1 et D2 dépend du système à vis utilisé.

Le fonctionnement de ce système est le suivant. Lorsque le faisceau photonique a son axe qui n'est pas confondu avec l'axe optique A, et est situé par exemple au-dessus de l'axe A, le thermocouple T1 reçoit plus d'énergie que le thermocouple T'1. L'amplificateur A1 reçoit une tension qui n'est pas nulle. Il amplifie ce signal d'erreur et actionne le moteur M1 dans un sens tel que la vis V1 soit tournée pour que le miroir bascule autour de la ligne D1, ce qui a pour effet de ramener l'axe du faisceau photonique vers l'axe optique du résonateur. De même si l'axe du faisceau photonique est décentré dans la direction P2, les thermocouples T2, T'2, le moteur M2 et la vis V2 ramènent le faisceau dans l'axe.

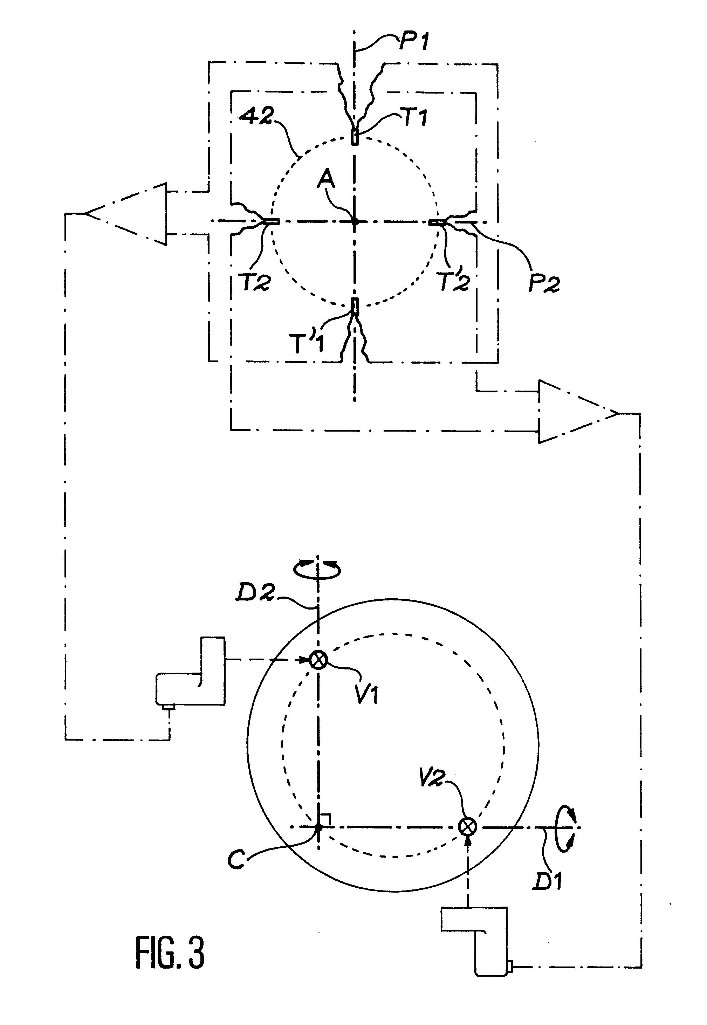

Si les directions D1 et D2 peuvent être quelconques (il suffit qu'elles ne soient pas parallèles), elles sont avantageusement perpendiculaires, comme illustré sur la figure 3. Dans ce cas les quatre thermocouples occupent les quatre sommets d'un carré centré sur l'axe optique A. En cas de fonctionnement en mode TEMoo le faisceau 42 est parfaitement centré sur l'axe optique A et tous les thermocouples reçoivent la même énergie.

Selon l'invention, l'ensemble des thermodétecteurs est disposé à l'intérieur de la cavité, c'est-à-dire entre les miroirs et non dans le faisceau de sortie.

En effet, après la fenêtre de sortie, différents phénomènes optiques peuvent se produire : le non parallélisme des faces de la fenêtre de sortie entraîne des réflexions multiples produisant des faisceaux parasites divergents qui interfèrent avec le faisceau principal ; d'autre part, en cas de décentrage, ces faisceaux parasites, et le faisceau principal, peuvent être diffractés par les bords de la fenêtre de sortie ou de son support. Ces deux phénomènes conduiraient à recueillir sur des thermodétecteurs un signal qui n'est aucunement représentatif du décentrage du faisceau, donc inexploitable dans un asservissement. Pour obtenir une meilleure précision l'ensemble de thermodétecteurs est disposé du côté du miroir qui n'est pas asservi.

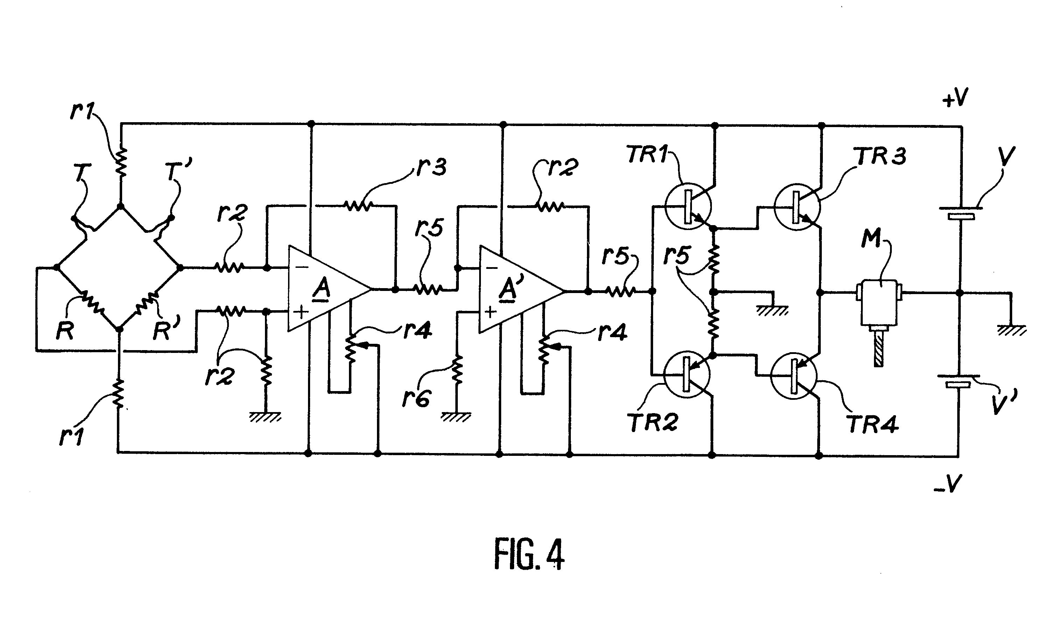

La figure 4 illustre un mode de réalisation d'un circuit pouvant être utilisé pour mettre en oeuvre l'invention. Deux thermocouples T et T' font partie d'un pont comprenant également deux résistances R et R'. Ce pont alimente deux amplificateurs A et A', le second étant relié à un ensemble de quatre transistors TR1, TR2, TR3, TR4, reliés à un moteur M.

Deux sources de polarisation V et V' alimentent les transistors et les amplificateurs. Diverses résistances r1 à r5 complètent l'ensemble.

A titre non limitatif, ces différents composants peuvent avoir les valeurs ou les caractéristiques suivantes :

R = R' = 100Ω
r1 = 10kΩ
r2 = 47kΩ
r3 = 270kΩ
r4 = 10kΩ
r5 = 1kΩ
A = A' = μA747
TR1 = 2N2221
TR2 = 2N2906
TR3 = TIP 31
TR4 = TIP 32

Après cette description, on voit que l'invention présente différents avantages :

- elle s'applique au fonctionnement continu du laser ; les mesures sont ainsi effectuées lorsque l'équilibre thermique de la cavité est atteint ;

- elle fournit un signal directement exploitable, permettant l'asservissement du réglage des miroirs,

- sa simplicité de conception, notamment l'utilisation d'une méthode dite "de zéro", la rend efficace et sûre,

- sa mise en oeuvre est aisée et une modification de réglage peut avoir lieu grâce à une tension de correction,

- le positionnement à l'intérieur de la cavité l'affranchit de toute perturbation externe,

- elle présente enfin l'avantage de ne pas nécessiter le prélèvement d'une partie du faisceau.

D'autre part, l'invention n'est pas limitée à l'asservissement d'un laser à anhydride carbonique à flux axial ; elle peut trouver son application plus généralement à l'asservissement d'un laser à gaz à flux axial, tel qu'un laser à argon, ou d'un laser solide. Dans ces types de lasers en effet, apparaissent les mêmes phénomènes optiques en sortie de cavité que dans un laser à $CO_2$ à flux axial, et l'utilisation d'un signal de décentrage du flux photonique dans la cavité pour orienter un miroir d'extrémité permet l'asservissement au mode fondamental.

**Revendications**

I. Laser à moyens d'asservissement en mode fondamental, ce laser comprenant une cavité stable ayant un axe optique (A), l'un au moins des deux miroirs (12, 14) qui la limitent étant muni de deux moyens de réglage ($V_1$, $V_2$) aptes à faire basculer ce miroir autour de deux directions (D1, D2), ce laser étant caractérisé par le fait qu'il comprend deux couples de thermodétecteurs (T1, T'1, T2, T'2) placés à l'intérieur de la cavité, disposés deux à deux symétriquement par rapport à l'axe optique (A) de la cavité et alignés selon deux directions (P1, P2) respectivement perpendiculaires auxdites directions de basculement du miroir (D1, D2), deux thermodétecteurs (T1, T'1 ou T2, T'2) d'un même couple étant montés électriquement en opposition et reliés à un moteur (M1, M2), ce moteur étant apte à agir sur les moyens de réglage (V1, V2) du miroir pour faire basculer celui-ci autour de la direction (D1 ou D2) perpendiculaire à la direction (P1 ou P2) des thermodétecteurs de ce couple.

2. Laser selon la revendication 1, caractérisé par le fait que les thermodétecteurs sont des thermocouples.

3. Laser selon la revendication 1, caractérisé par le fait que le laser est un laser à anhydride carbonique.

4. Laser selon la revendication 3, caractérisé par le fait que le laser à anhydride carbonique est à flux de gaz axial.

FIG. 1

FIG. 2

FIG. 3

0295997

FIG. 4

0295997

Office européen
des brevets

**RAPPORT DE RECHERCHE EUROPEENNE**

Numero de la demande

EP 88 40 1319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 10, no. 82 (E-392)[2139], 2 avril 1986, page 147 E 392; & JP-A-60 229 382 (MITSUBISHI DENKI K.K.) 14-11-1985 * En entier * | 1 | H 01 S 3/139 |
| A | US-A-3 753 150 (J.L. ZAR) * Résumé; colonne 6, lignes 21-27; colonne 2, lignes 57-61; revendication 12, lignes 18-21; revendication 13 * | 1-3 | |

DOMAINES TECHNIQUES RECHERCHES (Int. Cl.4)

H 01 S

Le présent rapport a été établi pour toutes les revendications

| Lieu de la recherche | Date d'achèvement de la recherche | Examinateur |
|---|---|---|
| LA HAYE | 05-09-1988 | FARNESE G.P. |